Europäisches Patentamt

European Patent Office

Office européen des brevets

(11) Publication number: **0 204 411**
**B1**

## (12) EUROPEAN PATENT SPECIFICATION

(45) Date of publication of patent specification: **07.02.90**

(51) Int. Cl.⁵: **A 47 J 31/56**

(21) Application number: **86302931.0**

(22) Date of filing: **18.04.86**

(54) **Improvements in and relating to coffee and/or tea brewing apparatus.**

(30) Priority: **29.05.85 GB 8513531**
**14.06.85 GB 8515061**

(43) Date of publication of application:
**10.12.86 Bulletin 86/50**

(45) Publication of the grant of the patent:
**07.02.90 Bulletin 90/06**

(84) Designated Contracting States:
**DE FR GB NL SE**

(56) References cited:
**DE-A-1 429 805**
**US-A-2 485 246**
**US-A-3 589 385**

(73) Proprietor: **W.M. STILL & SONS LIMITED**
**Fellows Road Hastings**
**East Sussex, TN34 3TX (GB)**

(72) Inventor: **Hayes, Cecil**
**17 Ashford Way**
**Hastings East Sussex (GB)**

(74) Representative: **Allen, Oliver John Richard et al**
**Lloyd Wise, Tregear & Co. Norman House**
**105-109 Strand**
**London, WC2R 0AE (GB)**

Courier Press, Leamington Spa, England.

## Description

The present invention relates to coffee and/or tea brewing apparatus.

Brewing apparatus is known in which a quantity or charge of water is either manually or automatically fed into a heater tank to commence an infusion of coffee or tea, the charge being of an amount necessary for a single infusion. If a further infusion is required it is necessary to wait for the completion of the infusion and also to await a complete reheating of the contents of the recharged heater tank. Whilst this operation is relatively fast when using a high powered heater, it is very slow when using a relatively low powered heater such as can be connected to normal domestic low power supplies such as 115 or 120v, 15 amps.

U.S. Patent No. 2485246 describes a brewing apparatus with two thermostats positioned at the tpo and bottom of the water tank. Hot water is displaced to a spray head from the top of the tank by an influx of cold water at the bottom of the tank. No baffle or other means is provided to prevent incoming cold water mixing freely with the existing hot water in the tank. Therefore, a heating up time will be required between each infusion due to the cooling effect of the incoming cold water.

An object of the invention is therefore to provide an apparatus capable of quickly providing a charge of hot water for a second or subsequent infusion operation(s).

Coffee and/or tea brewing apparatus according to the invention comprises a spray head positioned over an infuser pan to hold coffee or tea concentrate/leaves and arrange to fill a receptacle with an 'infused charge' of tea or coffee liquor, a hot water tank capable of holding a plurality of "infused charges" of water, the top of the tank being connected via a conduit to the spray head, heater means for the hot water tank means for replenishing the hot water tank at or adjacent its bottom surface and two upper and lower thermostat probes, the lower being positioned to detect the water temperature at or adjacent the bottom of the tank characterised in that the upper probe is located a distance below the top of the tank corresponding to a volume equivalent to a single "infused charge" of water and detects the water temperature of the said volume of water and in that a horizontally disposed deflector plate is provided in the hot water tank positioned above a cold water inlet and arranged to divert incoming water away from the centre of the tank to help to maintain distinct stratas of hot and cold water in the tank.

With such apparatus when the top volume of water has been discharged, fresh cold water enters the tank at its bottom and a further heated volume of water replaces the top volume. This is already at or near the desired infusing temperature and is then rapidly ready for infusion, its temperature being measured by the upper probe. The lower portion of the tank will not then be at this temperature.

Embodiments of the invention will now be described by way of example with reference to the accompanying drawings in which:—

Figure 1 is a side sectional view of manual coffee (or tea) brewing apparatus according to the invention,

Figure 2 is a top plan view of the apparatus of Figure 1,

Figure 3 is a side sectional view of an automatic brewing apparatus according to the invention,

Figure 4 is a rear view of the apparatus of Figure 3,

Figure 5 is a top plan sectional view of the apparatus of Figure 3 taken at V—V,

Figure 6 is a top plan sectional view of the apparatus of Figure 3 taken at VI—VI,

Figure 7 is a circuit diagram for one version of the apparatus of Figure 3 without a dispensing tap,

Figure 8 is a circuit diagram for the apparatus of Figure 3 with a dispensing tap, and

Figure 9 is a modified circuit diagram for the apparatus of Figure 3 with a dispensing tap.

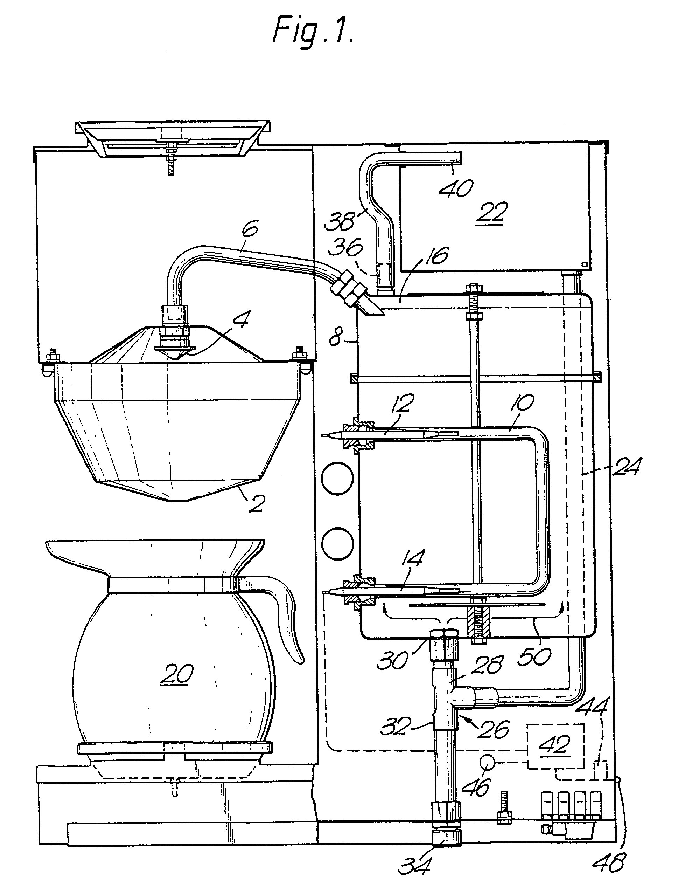

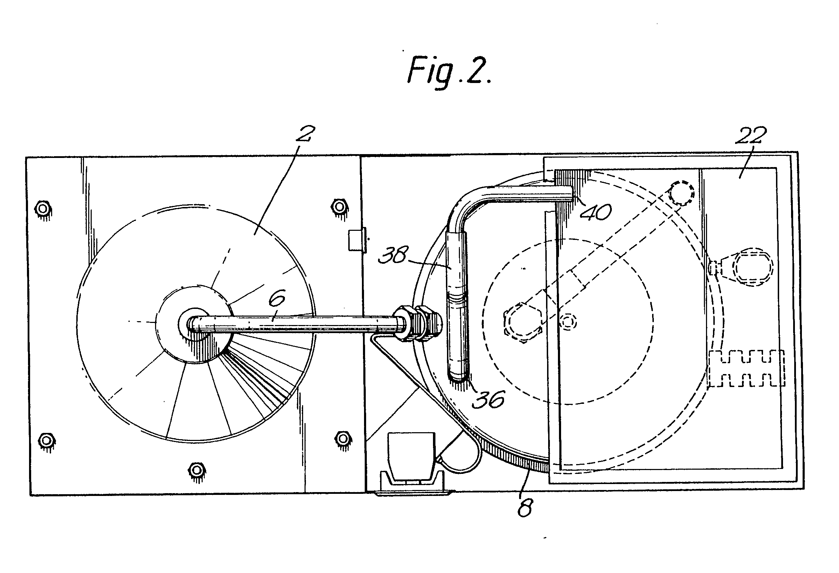

The apparatus shown in Figures 1 and 2 is a manually filled brewing apparatus having an infuser pan 2, a spray head 4 and a conduit 6 leading from the spray head to the top of a hot water tank 8, the conduit 6 connecting as a siphon tube from the top of the tank. The tank 8 has a heater element 10, an upper thermostat 12 and a lower thermostat 14. The upper (or record) thermostat 12 is located about a third of the way down from the top 16 of the tank so as to measure the temperature (which when hot is normally designed to be between about 90 and 95°C) of the top third of the volume of the tank which is equivalent to one "infusion charge" i.e. the receiving volume of the receptacle 20 positioned below the infuser pan 2. The lower (first) thermostat 14 is arranged to measure the water temperature at the bottom of the tank normally set between about 92 and 97°C.

Above the tank 8 is a manual filler tank 22 connected via a conduit 24 to a T-junction 26, the upper leg 28 of which opens into an inlet 30 of the tank. The lower leg 32 of the T-junction extends downwards to a drain plug 34. At the top of the tank 8 is an air outlet 36 connected via a conduit 38 to an inlet 40 at the top of filler tank 22. A baffle plate 50 is provided above inlet 30 to divert the rising water during a filling operation away from the centre of the tank and maintain the water in the tank stratified, i.e., in distinct strata of hot and cold water zones.

The operation of the apparatus shown in Figures 1 and 2 is as follows:—

The tank 8 is filled manually through tank 22 and the heater element 10 is switched on. As the temperature of the water rises, the hot water rises to the top of tank 8 until thermostat 12 indicates by means of water ready lamp 46 that the top of the tank has reached infusion temperature. At this state a first charge is ready for an infusion operation which is commenced by pouring an additional charge of water into filler tank 22. This water feeds into the bottom of the tank through conduit 30, displacing the hot water out of the top of the tank through conduit 6. Because of the baffle plate 50 the cold water entering the tank is encouraged to remain in a distinct strata at the bottom of the tank and therefore the amount of cold water mixing with the hot water is minimal and hence the temperature of the water at the top of the tank is kept high whilst the heater at the bottom of the tank brings the temperature of the cold strata up, in this way several infusions can be achieved in rapid succession depending on the size of the tank.

Each infusion water charge perculates through the coffee or tea in the infuser pan 2 into receptacle 20.

The brewing apparatus is preferably left on so that the water in the tank 8 continues to heat up until thermostat 14 reaches a temperature of 92 to 97°C and then by means of controller 42 cuts off power to heater element 10.

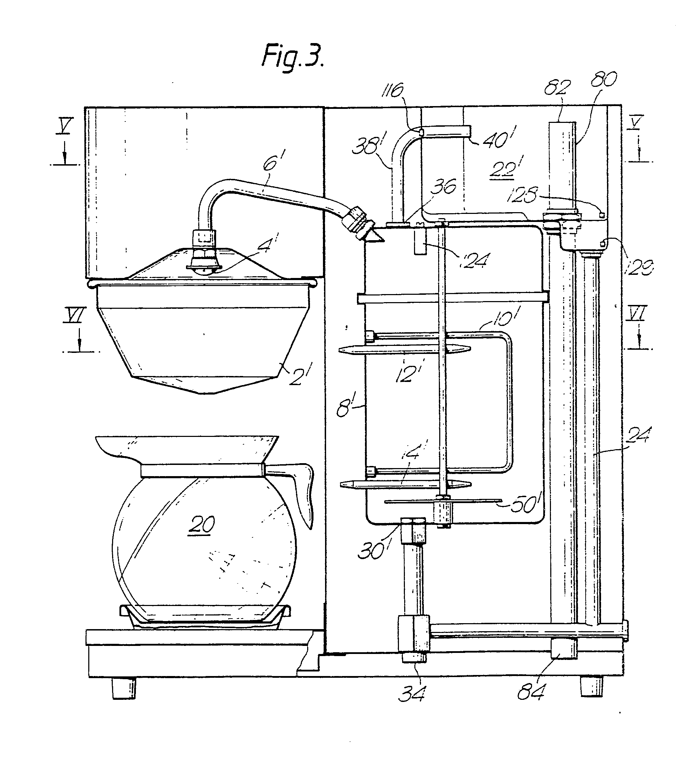

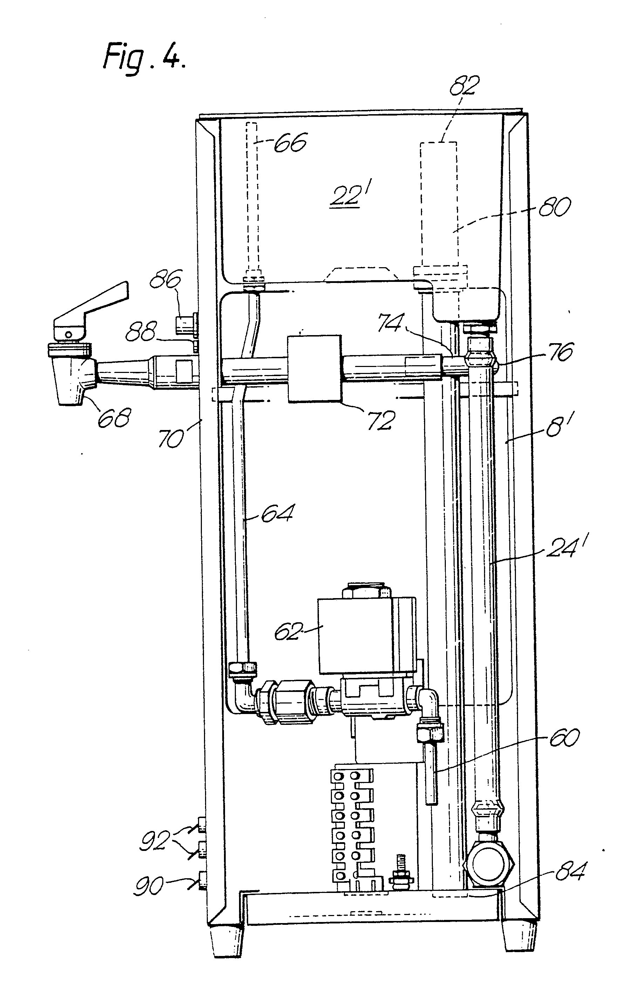

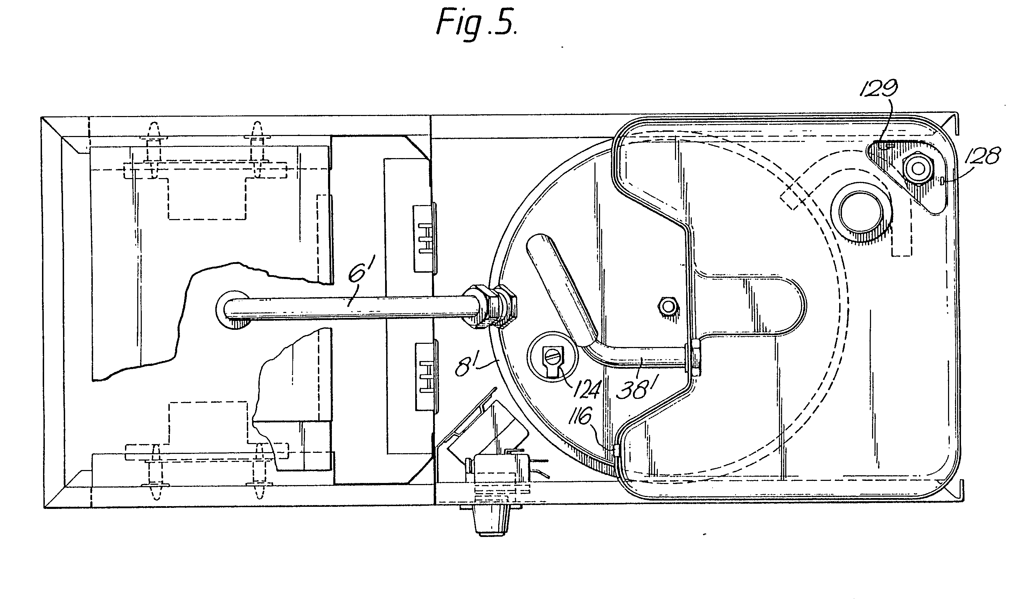

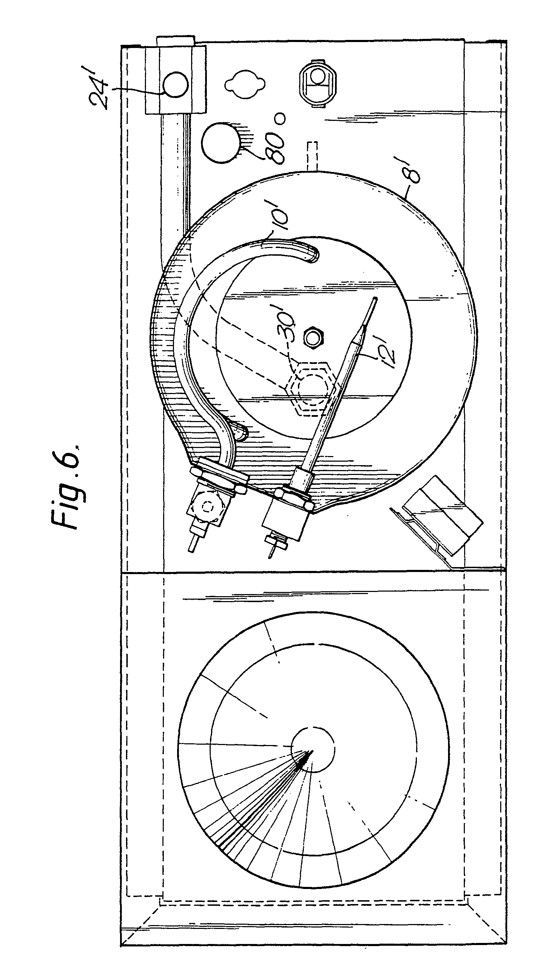

Figures 3 to 6 show an automatically filled brewing apparatus having a similar hot water tank 8' infuser pan 2' with spray head 4' and tank to spray head connecting siphon conduit 6'. The tank also has an upper thermostat 12' and lower thermostat 14' with heater element 10', a deflector plate 50' above inlet 30' and a vent 36' opening at 40' into a filler tank 22'.

The main difference between apparatus shown in Figure 3 and that shown in Figure 1 is the provision of a water means connection 60 leading to a water inlet solenoid valve 62 connected by conduit 64 to an inlet 66 in filler tank 22'. Filler tank 22' has an outlet conduit 24' connecting to heater tank inlet 30'. The water draw-off tap 68 on the side of the casing 70 of the apparatus is connected via an isolation solenoid valve 72 to a conduit 74 connected in turn to a water outlet 76 in the top third of tank 8'.

An emergency overflow pipe 80 provides an emergency outlet 82 from the filler tank 22' to vent through the apparatus to an outlet 84 below the apparatus. This is in case of failure of valve 62 by remaining open so that water can overflow through the apparatus without damaging any electrical equipment.

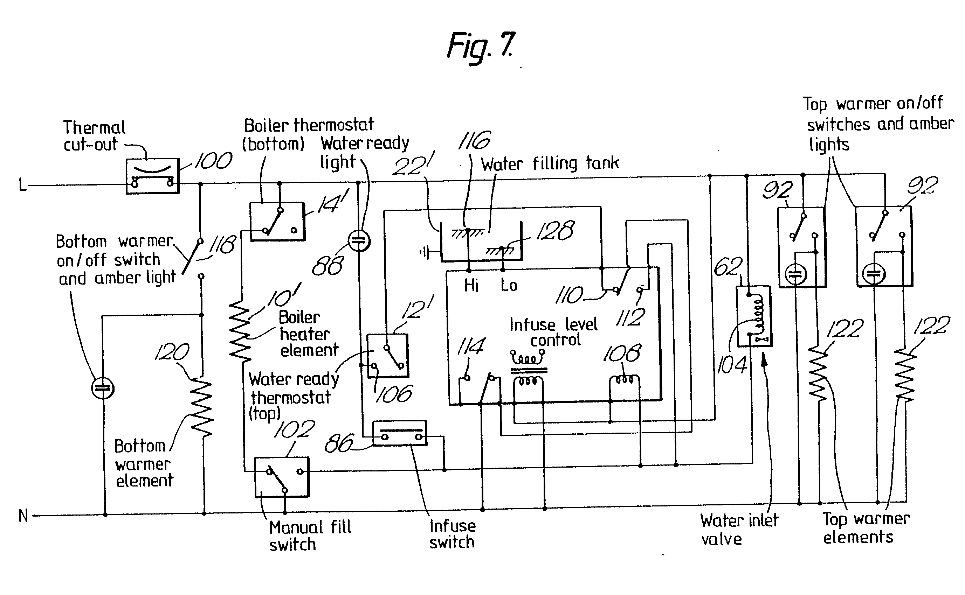

An infusion switch 86 and water ready lamp 88 are mounted on the side of casing 70. A machine on/off switch 90 and top heater switch or switches 92 are also mounted on side of casing 70. The circuit diagram for an automatic brewing apparatus without a side water draw-off tap is shown in Figure 7 and includes a thermal cut-out 100 which operates to disconnect the electrical supply to the main heater 10' if the apparatus overheats.

When the apparatus is first to be filled with water a manual fill switch 102 is moved from the position shown in Figure 7 to make a circuit through the solenoid 104 of the water inlet valve 62 so that this is opened allowing water from the mains supply to enter the filler tank 22' until the apparatus is full. The fill switch 102 is then moved to the position shown in Figure 7. In this position the main boiler heater element 10' is energised through the first thermostat 14' to heat the water in the tank. When the water in the upper portion of the tank above the second thermostat probe 12' has been heated to the desired temperature, the thermostat 12' operates from the position shown in Figure 7 to make with the contact 106. The water ready light 88 is then lit showing that an infusion operation may take place.

When the infuse switch 86 is momentarily closed, the relay 108 is energised moving the switch 110 from the contact shown to a second contact 112. When in this position the relay 108 is energised through the connection 112 to keep the switch in that operative position. The solenoid 104 is then operated through the switch 110 and a further switch 114 to open the water inlet valve to allow water to enter the water filling tank from the mains. Infusion then takes place until the water level reaches the high level probe 116 in the water filling tank whereupon the switch 114 is operated to open the connection between the solenoid 104 and the neutral line thus closing the water inlet valve 62.

When the whole tank has reached the desired water temperature, the bottom thermostat 14' operates to de-energise the boiler heater element 10'.

Manual switch 118 is provided to energise a bottom warmer element 120. Heating elements 122 for the top warmer elements are energised on closure of switches 92.

The infusion switch 86 cannot be operated to open the water inlet valve until the water ready light 88 is lit and able to pass current. Hence, coffee infusion cannot take place until the water in the top portion of the tank is at the desired temperature.

It will of course be appreciated that a mains on/off switch for the boiler heating element may be provided if desired.

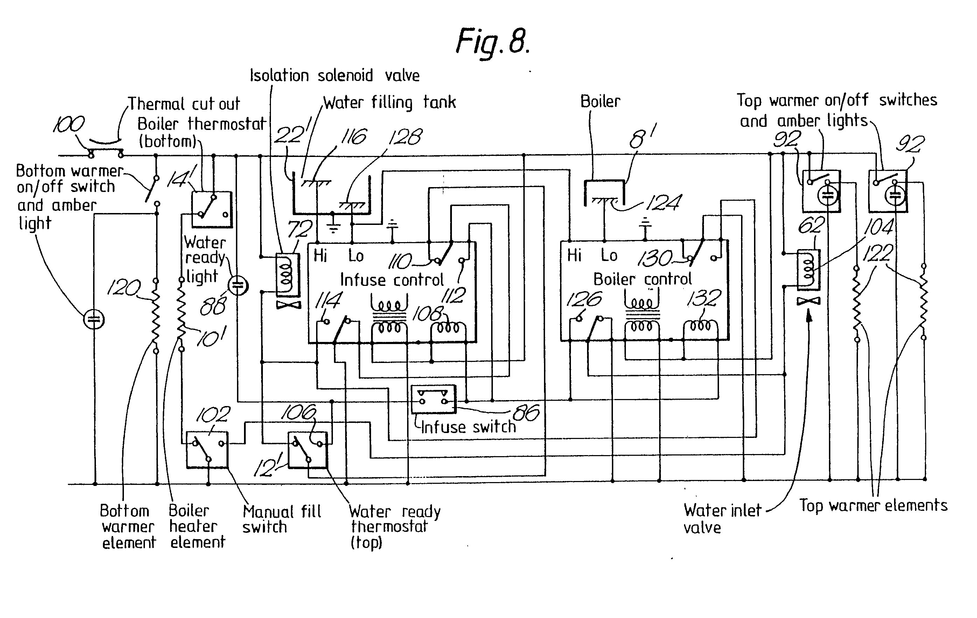

The wiring diagram illustrated in Figure 8 is similar to that described with reference to Figure 7 except that it illustrates the apparatus with a side water draw-off tap.

When the water in the top portion of the boiler tank is being heated to the desired temperature, a tap isolation valve 72 remains closed with the solenoid energised, the circuit being made through the top thermostat 12', the relay switch 110 and the level switch 114. When the top thermostat 12' is operated to make the circuit through the water ready lamp 88 then the circuit through the solenoid of the valve 72 is broken at the top thermostat, and the valve 72 is opened allowing hot water to be drawn off from the tap. When the thermostat 12' operates to change the switch 106 because the water in the top portion of the boiler tank has dropped below the required temperature, then the valve 72 again closes.

When water is being drawn off through the tap, the water level drops below a level probe 124 located in the top of the boiler between the point of take off for the spray head and the point of take off for the tap. When the water level drops below this probe, a switch 126 moves so as to complete the circuit through the solenoid 104 of the water inlet valve 62 so as to open this valve. Water then enters the apparatus until the level reaches the low water probe 128 in the water filling tank which operates the switch 126, where upon the circuit to the water inlet valve 62 is made by causing the water supply to be shut off.

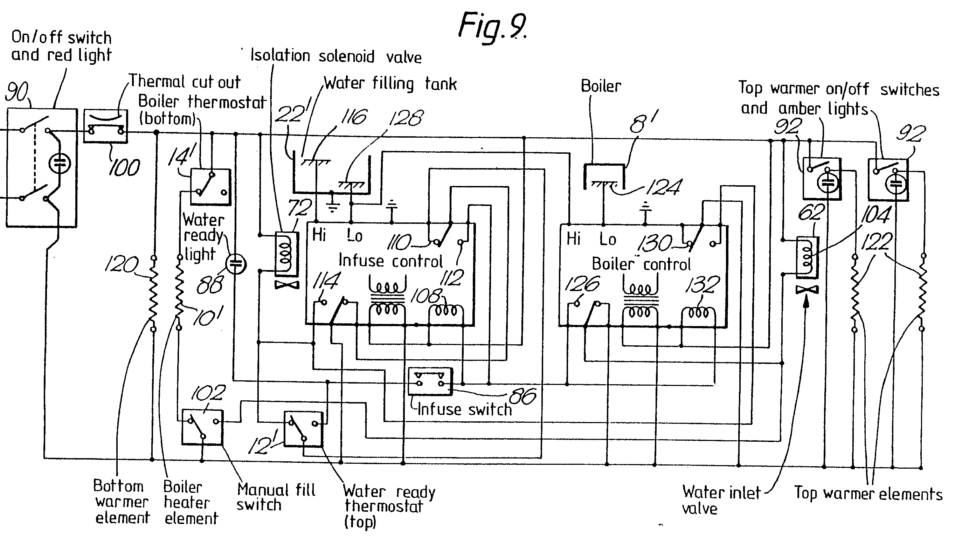

When the infusion switch 86 is pressed the isolation solenoid valve 72 is closed by the hold-on switch 130 by operation of the coil 132 within the boiler control unit. This prevents water from being drawn off through the tap during infusion of coffee or tea. A two-pole on-off switch 90 with indicator lamp may be provided (see Figure 9).

## Claims

1. Coffee and/or tea brewing apparatus comprising a spray head positioned over an infuser pan to hold coffee or tea concentrate/leaves, and arranged to fill a receptacle with an "infused charge" of coffee or tea liquor, a hot water tank capable of holding a plurality of "charges" of water the top of the tank being connected via a conduit to the spray head, heater means for the hot water tank, means for replenishing the hot water tank with fresh water at or adjacent its bottom surface and upper and lower thermostat probes, the lower being positioned to detect the water temperature at or adjacent the bottom of the tank, characterised in that the upper probe (12) is located a distance below the top of the tank (8) corresponding to a volume equivalent to a single "infused charge" of water, and detects the water temperature of the said volume of water and in that a horizontally disposed deflector (50) plate is provided in the hot water tank positioned above a cold water inlet (30) and arranged to divert incoming water away from the centre of the tank to help to maintain distinct stratas of hot and cold water in the tank.

2. Apparatus as claimed in Claim 1 wherein the upper probe (12) is positioned about one third of the way down from the top of the tank (8).

3. Apparatus as claimed in Claim 1 or 2 wherein the means for replenishing the hot water tank comprises a filler tank (22) positioned above the hot water tank (8) and connected to an inlet (30) at or adjacent the bottom thereof.

## Patentansprüche

1. Kaffee- und/oder Teemaschine mit einem Sprühkopf, der sich über einer Aufgußpfanne für Kaffee- oder Teekonzentrat/blätter befindet und so angeordnet ist, daß er ein Gefäß mit einer aufgegossenen Portion Kaffee- oder Teeflüssigkeit füllt, einem Heißwassertank, der eine Mehrzahl von Wasserportionen aufnehmen kann, wobei das obere Tankende über eine Leitung mit dem Sprühkopf verbunden ist, Heizungsmitteln für den Heißwassertank, einem Mittel zum Wiederauffüllen des Heißwassertankes mit frischem Wasser an oder in der Nähe seiner Bodenfläche sowie mit oberen und unteren Wärmefühlern, wobei der untere so positioniert ist, daß er die Wassertemperatur am oder in der Nähe des Tankbodens erfaßt, dadurch gekennzeichnet, daß der obere Fühler (12) sowie unter dem oberen Tankende (8) liegt, wie es einem einer einzigen aufgegossenen Wasserportion entsprechenden Volumen entspricht und die Wassertemperatur jenes Wasservolumens erfaßt, und daß im Heißwassertank über dem Kaltwassereinlauf (30) horizontal eine Ablenkplatte (50) vorgesehen ist, die so angeordnet ist, daß sie das einlaufende Wasser von der Tankmitte weglenkt, um im Tank eine bestimmte Schichtung von heißem und kaltem Wasser aufrechtzuerhalten.

2. Maschine nach Anspruch 1, bei der der obere Fühler (12) auf etwa einem Drittel der Höhe unter dem oberen Tankende (8) positioniert ist.

3. Maschine nach Anspruch 1 oder 2, bei der das Mittel zum Wiederauffüllen des Heißwassertankes einen Auffülltank (22) umfaßt, der über dem Heißwassertank (8) positioniert ist und mit einem Einlauf (30) an oder in der Nähe des Bodens des Heißwassertankes (8) verbunden ist.

## Revendications

1. Dispositif de préparation de café et/ou de thé, comprenant une tête de projection placée au-dessus d'un bac d'infusion pour contenir un concentré/des feuilles de café ou de thé, et agencée de façon à remplir un récipient avec une "charge infusée" de liqueur de café ou de thé, un réservoir d'eau chaude capable de contenir une pluralité de "charges" d'eau, le sommet du réservoir étant raccordé via un conduit à la tête de projection, des moyens de chauffage pour le réservoir d'eau chaude, des moyens de remplissage du réservoir d'eau chaude avec de l'eau fraiche à ou au voisinage de sa surface inférieure et des sondes thermostatiques supérieure et inférieure, la sonde inférieure étant placée de façon à détecter la température de l'eau au fond ou près du fond du réservoir, caractérisé en ce que la sonde supérieure (12) est placée sous le sommet du réservoir (8) à une distance qui correspond à un volume équivalent à une seule "charge infusée" d'eau, et détecte la température de l'eau dudit volume d'eau, et en ce qu'il est prévu dans le réservoir d'eau chaude une plaque de déflexion (50) disposée horizontalement placée au-dessus d'une entrée d'eau froide (30) et agencée de façon à dévier l'eau entrance à l'écart du centre du réservoir pour aider à maintenir des couches distinctes d'eau chaude et d'eau froide dans le réservoir.

2. Dispositif suivant la revendication 1, dans lequel la sonde supérieure (12) est placée à environ un tiers de la hauteur compté vers le bas à partir du sommet du réservoir (8).

3. Dispositif suivant la revendication 1 ou 2, dans lequel les moyens de remplissage du réservoir d'eau chaude comprennent un réservoir de remplissage (22) placé au-dessus du réservoir d'eau chaude (8) et raccordé à une entrée (30) située au fond ou près du fond de celui-ci.

EP 0 204 411 B1

## Fig.1.

Fig. 2.

# Fig.3.

Fig. 4.

Fig.5.

Fig.6.

24'

30'

10'

80°

12'

8'

EP 0 204 411 B1

# Fig. 7.

Thermal cut-out — 100

Boiler thermostat (bottom) 14'

Water ready light

22'

116

Water filling tank

Top warmer on/off switches and amber lights

92    92

L

Bottom warmer on/off switch and amber light — 118

10'
Boiler heater element

88

128

Hi    Lo

110    112

Infuse level control

108

62

104

120

12'
Water ready thermostat (top) 102

106

114

122    122

Bottom warmer element

86

Manual fill switch

Infuse switch

Water inlet valve

Top warmer elements

N

EP 0 204 411 B1

## Fig.8.

Isolation solenoid valve

Water filling tank

Boiler

Top warmer on/off switches and amber lights

Thermal cut out
Boiler thermostat (bottom)

100

22'    116    128

8'

92    92

Bottom warmer on/off switch and amber light

14'

72

Hi  Lo   110

124

Hi  Lo   130

62    104

122

120

Water ready light

88    10'

114    108    112

126    132

Infuse control

Boiler control

102    106

12'

86

Infuse switch

Bottom warmer element

Boiler heater element

Manual fill switch

Water ready thermostat (top)

Water inlet valve

Top warmer elements

EP 0 204 411 B1

# Fig.9.

On/off switch and red light

Isolation solenoid valve

Water filling tank

Boiler

Top warmer on/off switches and amber lights

90

Thermal cut out
Boiler thermostat (bottom)

22'   116   128

8'

92   92

100

14'

72

124

62   104

Water ready light

Hi   Lo   110

Hi   Lo   130

122

120

88   101

Infuse control

Boiler control

114   108   112

126   132

102

12'

Infuse switch   86

Bottom warmer element

Boiler heater element

Manual fill switch

Water ready thermostat (top)

Water inlet valve

Top warmer elements

EP 0 204 411 B1

9